## Europäisches Patentamt

### European Patent Office
### Office européen des brevets

(11) Veröffentlichungsnummer: **0 204 997**

**A2**

(12) # EUROPÄISCHE PATENTANMELDUNG

(21) Anmeldenummer: **86106740.3**

(51) Int. Cl.4: **B60J 1/17** , B60J 1/14

(22) Anmeldetag: **16.05.86**

(30) Priorität: **12.06.85 DE 3520974**

(43) Veröffentlichungstag der Anmeldung:
**17.12.86 Patentblatt 86/51**

(84) Benannte Vertragsstaaten:
**AT BE CH DE FR GB IT LI LU NL SE**

(71) Anmelder: **DYNAMIT NOBEL
AKTIENGESELLSCHAFT
Postfach 1261
D-5210 Troisdorf, Bez. Köln(DE)**

(72) Erfinder: **Hellriegel, Edmund
Akazienweg 1
D-5024 Pulheim 1(DE)**

(54) **Fahrzeugfenster.**

(57) Das Fahrzeugfenster weist eine feststehende Scheibe (11) und eine bewegbare Scheibe (12) auf. Zum Öffnen kann die bewegbare Scheibe (12) entweder versenkt oder zum Fahrzeuginnern hin abgeklappt werden. Die feststehende Scheibe (11), die den oberen Bereich der Fensteröffnung (10) einnimmt, ermöglicht eine äußerst freie Formgestaltung der Fahrzeugtür und eine Vergrößerung des Fahrzeuginnenraumes.

FIG.3

EP 0 204 997 A2

### Fahrzeugfenster

Die Erfindung betrifft ein Fahrzeugfenster mit einer feststehenden Scheibe, die einen Teil der Fensteröffnung ausfüllt und einer bewegbaren Scheibe, die den Rest der Fensteröffnung bedeckt.

Die üblichen Fahrzeugfenster von Kraftfahrzeugen enthalten entweder eine feste Scheibe, die die gesamte Fensterfläche bedeckt,oder eine absenkbare Scheibe, die ebenfalls die gesamte Fensterfläche bedeckt. Wird die bewegbare Fensterscheibe heruntergelassen, dann öffnet sich zunächst ein Spalt am oberen und vorderen Fensterende. Dadurch entsteht im fahrenden Auto ein erheblicher Luftzug, weil das vordere und obere Fensterende im stärksten Luftströmungsbereich des Fahrwindes liegen. Ferner wird Regen selbst bei geringfügig geöffnetem Fenster in starkem Maße in das Fahrzeuginnere geleitet.

Bekannt ist zwar ein Fahrzeugfenster, bei dem im oberen Bereich eine feststehende Scheibe und im unteren Bereich eine aufklappbare bewegbare Scheibe angeordnet ist, jedoch wird dort die bewegbare Scheibe außen an die feststehende Scheibe angeklappt, wodurch der Strömungswiderstand des Fahrzeugs erhöht wird. Außerdem besteht die Gefahr, daß die hochgeklappte Scheibe unbeabsichtigt herunterklappt.

Der Erfindung liegt die Aufgabe zugrunde,ein Fahrzeugfenster zu schaffen, bei dem die bewegbare Scheibe nur einen Teil der Fensteröffnung ausfüllt und zum Öffnen des Fensters in raumsparender und die Fahreigenschaften des Fahrzeugs nicht beeinträchtigender Weise aus der Fensteröffnung entfernt wird.

Die Lösung dieser Aufgabe besteht bei einer ersten Variante der Erfindung darin, daß die bewegbare Scheibe aus einem am vorderen Ende der Fensteröffnung angeordneten, um eine horizontale Schwenkachse schwenkbaren im wesentlichen teilkreisförmigen Sektor besteht, der in das Innere der Fahrzeugtür hinein absenkbar ist.

Der Sektor schließt sich beim Anheben bündig an die feststehende Scheibe an, so daß kein stufenförmiger Übergang entsteht. Der rückwärtige und obere Fensterbereich ist durch die feststehende Scheibe ständig verschlossen. Die sektorförmige bewegbare Scheibe bildet ein Kommunikationsfenster, das nur im vorderen Bereich der Fensteröffnung angeordnet ist und durch eine einfache Schwenkbewegung, bei der die bewegbare Scheibe innerhalb der Scheibenebene verschwenkt wird, geöffnet wird.

Gemäß einer zweiten Variante der Erfindung ist die bewegbare Scheibe, die im unteren Bereich der Fensteröffnung angeordnet ist, in das Innere der Fahrzeugtür hinein absenkbar.

Beim Absenken der bewegbaren Scheibe steht ein immer grös ser werdender Spalt im Mittelbereich der Fensterfläche. Dadurch werden Zugerscheinungen, die insbesondere an den oberen und vorderen Kanten des Fensters auftreten, vom Fahrzeuginnern ferngehalten. Die durch die heruntergelassene bewegbare Scheibe freigelegte Öffnung befindet sich unmittelbar über der Unterkante des Fensters, so daß eine Person, die in dem Fahrzeug sitzt, bequem mit dem Arm durch die Öffnung hindurch greifen kann oder auch beim Fahren den Arm in die Öffnung legen kann.

Gemäß einer dritten Variante der Erfindung ist vorgesehen, daß die bewegbare Scheibe um eine in der Nähe des unteren Randes der Fensteröffnung angeordnete in Fahrzeuglängsrichtung verlaufende Schwenkachse herum in das Fahrzeuginnere hinein klappbar ist.

Auch bei dieser dritten Variante wird durch das Einklappen der bewegbaren Scheibe die Außenkontur des Fahrzeugs aerodynamisch kaum beeinflußt. Die bewegbare Scheibe kann in eine in der Fahrzeugtür angeordnete Mulde eingeklappt werden, so daß sie im Öffnungszustand des Fensters im Fahrzeuginnenraum nicht störend in Erscheinung tritt.

Alle drei Varianten der Erfindung haben den Vorteil, daß der Fahrzeugkonstrukteur hinsichtlich der Formgebung der Fahrzeugtür erheblich weniger Einschränkungen ausgesetzt ist als bei den üblichen Fensterkonstruktionen. So ist es aus aerodynamischen Gründen oft zweckmäßig, die Fahrzeugtür nicht im wesentlichen ebenflächig zu gestalten, sondern sie, insbesondere im oberen Bereich, nach außen auszubauchen, um den Nutzraum des Fahrzeugs zu vergrößern. Die meisten Personenwagen sind im unteren Bereich breiter als im oberen Bereich, so daß im oberen Bereich Nutzraum verloren geht, der durch eine nach außen gewölbte Form der Tür wiedergewonnen werden könnte. Dies scheitert je doch daran, daß die im Innern der Tür versenkbare Scheibe nur eine mäßige Krümmung haben kann. Bei Verwendung des erfindungsgemäßen Fahrzeugfensters kann die feststehende Scheibe dagegen eine beliebige Form haben, so daß die Fahrzeugtür den erwähnten gestalterischen Beschränkungen nicht unterliegt.

Ein weiterer Nachteil der bekannten versenkbaren Fenster. besteht darin, daß die Scheiben nicht bündig mit der Außenkontur der Fahrzeugtür abschließen können. Vielmehr ist am Fenster ein nach außen vorspringender Rahmen erforderlich, der den Strömungswiderstand des Fahrzeugs erhöht und Luftverwirbelungen verursacht. Bei dem erfindungsgemäßen Fahrzeugfenster ist vorzugsweise vorgesehen, daß die feststehende Scheibe und/oder die bewegbare Scheibe nach außen bündig mit dem Rahmen der Fensteröffnung abschließt.

Im folgenden werden unter Bezugnahme auf die Zeichnungen Ausführungsbeispiele der Erfindung näher erläutert.

Es zeigen:

Fig. 1 eine Außenansicht einer Fahrzeugtür mit Fahrzeugfenster,

Fig. 2 eine Innenansicht der Fahrzeugtür nach Fig. 1,

Fig. 3 eine zweite Variante der Fahrzeugtür mit translatorisch bewegbarer Scheibe,

Fig. 4 eine Ansicht der Fahrzeugtür nach Fig. 3 aus Richtung des Pfeiles IV,

Fig. 5 einen Schnitt entlang der Linie V-V von Fig. 3,

Fig. 6 eine dritte Variante der Fahrzeugtür,

Fig. 7 eine Ansicht der Fahrzeugtür nach Fig. 6 aus Richtung des Pfeiles VII und

Fig. 8 einen Schnitt entlang der Linie VIII-VIII in Fig. 6.

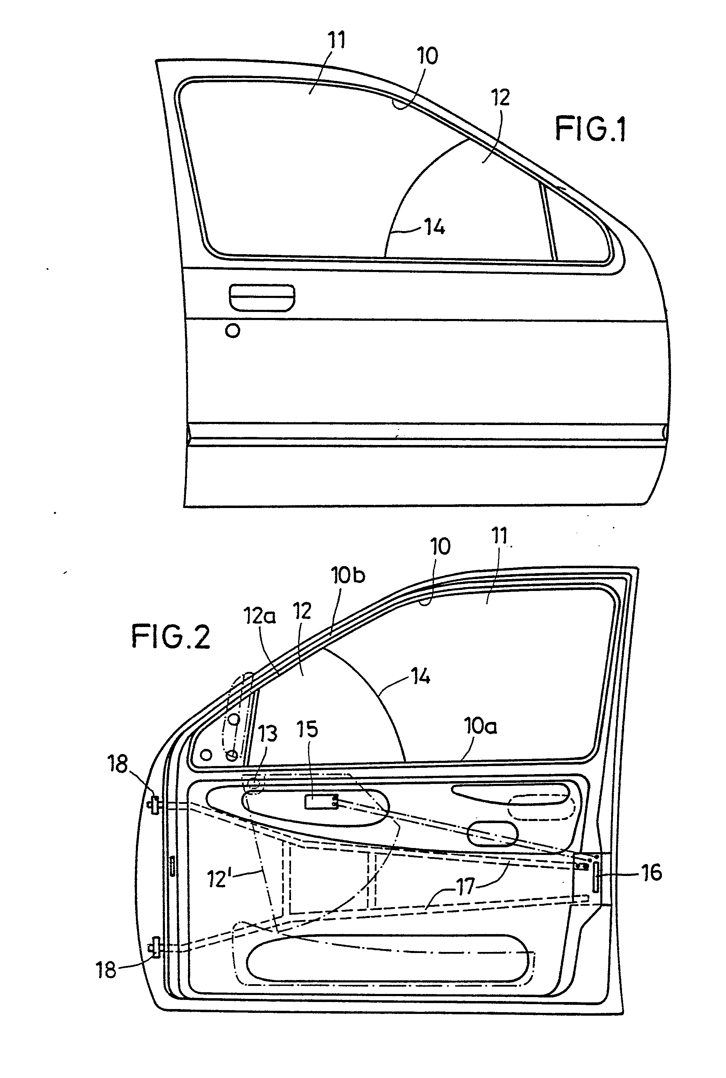

Bei der Fahrzeugtür nach den Fign. 1 und 2 ist die übliche Fensteröffnung 10, deren Höhe sich zum vorderen Ende hin verringert, zu einem Teil von einer feststehenden Scheibe 11 verschlossen, während der verbleibende Bereich durch die bewegbare Scheibe 12 verschließbar ist. Die bewegbare Scheibe 12 besteht aus einem im wesentlichen teilkreisförmigen Sektor, der um die Schwenkachse 13 herum schwenkbar und in das Innere der Fahrzeugtür versenkbar ist, so daß er dann die in Fig. 2 strich-punktiert dargestellte Position 12' einnimmt. Die Schwenkachse 13 befindet sich im Innern der Fahrzeugtür, also unterhalb der Fensteröffnung 10, so daß sie von außen nicht sichtbar ist. Die kreisbogenförmig um die Schwenkachse 13 herum verlaufende Trennungslinie zwischen den Scheiben 11 und 12 ist mit 14 bezeichnet. Die bewegbare Scheibe 12 erfaßt den gesamten vorderen Bereich der Fensteröffnung 10, d.h. sie erstreckt sich von dem vorderen Drittel der Unterkante 10a der Fensteröffnung bis zu dem vorderen Schrägholmen 10b. Zur Anpassung an diesen Schrägholmen ist die bewegbare Scheibe 12 nicht exakt sektorförmig ausgebildet, sondern mit einer schrägen Kante 12a versehen, die sich im Schließzustand der Scheibe 12 an den Schrägholmen 10b anlegt.

Das Verschwenken der Scheibe 12 um die Schwenkachse 13 herum erfolgt durch Betätigen eines (nicht dargestellten) Kurbelmechanismus oder mit Hilfe eines Servoantriebs.

Bei dem dargestellten Ausführungsbeispiel besteht die Fahrzeugtür aus einem tragenden Skelett, das der Innenhaut der Fahrzeugtür einstückig angeformt ist, während die Außenhaut an dieser Tragstruktur befestigt ist. Im Innern der Fahrzeugtür befindet sich ein Betätigungsmechanismus 15 für das Schloß 16. In Fig. 2 sind gestrichelt Streben 17 eingezeichnet, die die an einem Ende der Fahrzeugtür angeordneten Scharnierteile 18 mit der Halterung für das Schloß 16 verbinden und die somit sicherstellen, daß sich das Schloß 16 in fester räumlicher . Zuordnung zu den Scharnierteilen 18 befindet.

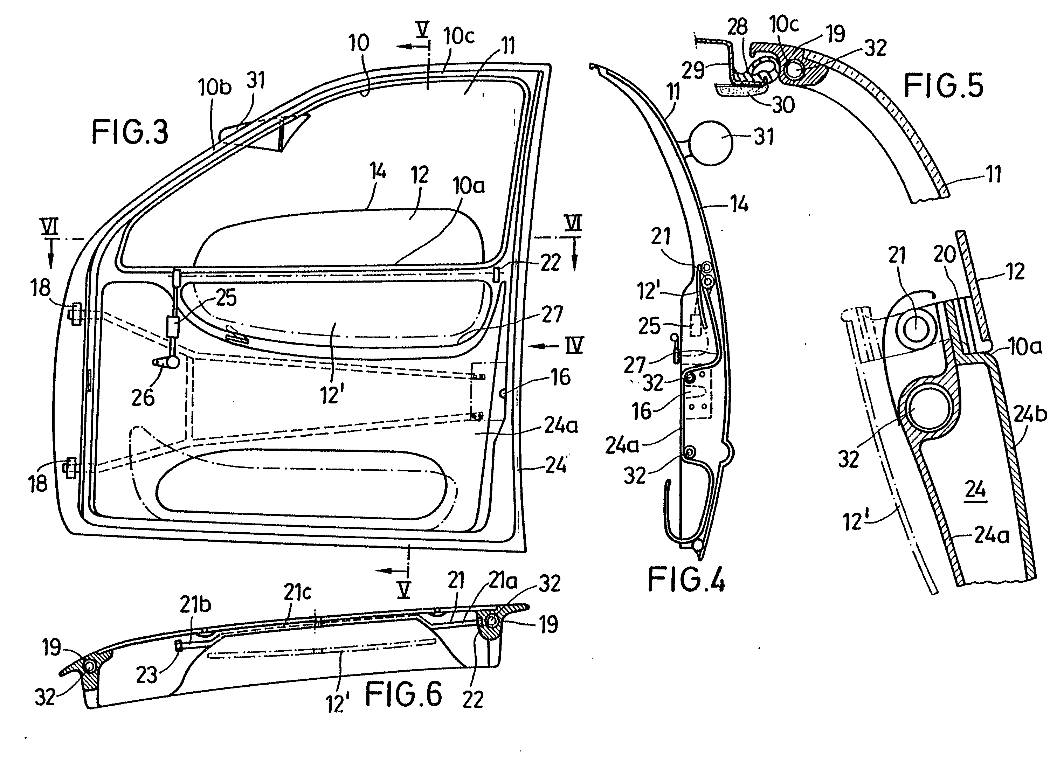

Die in den Fign. 3 bis 5 dargestellte Variante des Fahrzeugfensters weist eine feststehende Scheibe 11 auf, die an dem die Fensteröffnung 10 umgebenden Rahmen 19 fest angebracht ist, sowie eine bewegbare Scheibe 12. Die bewegbare Scheibe 12 erstreckt sich längs der Unterkante 10a der Fensteröffnung, jedoch bei dem dargestellten Ausführungsbeispiel nur über einen Teil der Länge dieser Unterkante 10a. Die Scheibe 12 kann sich auch über die gesamte Länge der Fensteröffnung erstrecken.

Die Unterkante der Scheibe 12 ist an einem Halter 20 befestigt, der an der schwenkbar gelagerten Schwenkachse 21 angebracht ist. Die Schwenkachse 21 verläuft im wesentlichen parallel zur Fahrzeuglängsrichtung. Ihre Enden 21a und 21b sind in Lagern 22 und 23 der Fahrzeugtür gelagert. Der mittlere Bereich 21c der Schwenkachse 21 ist gegenüber den äußeren Bereichen 21b und 21c bei geschlossener Scheibe 12 nach außen hin versetzt, so daß das Ende der Scheibe 12 im Schließzustand relativ weit außen angeordnet ist, während dieses Ende im Öffnungszustand um die Breite der Tür 24 in das Fahrzeuginnere hineingeschwenkt wird. Dadurch kann sich die Scheibe 12' im Öffnungszustand gemäß Fig. 5 von innen an die Fahrzeugtür 24 anlegen, wobei dann der Scheibenrand, der im Schließzustand nach oben weist, nach unten gerichtet ist.

Das Drehen der Schwenkachse 21 erfolgt bei dem vorliegenden Ausführungsbeispiel wahlweise entweder mit einem Servomotor 25, der im Innern der Fahrzeugtür 24 befestigt ist, oder mit einem Kurbelantrieb 26. Der Servomotor 25 bzw. der Kurbelantrieb 26 wirkt auf die horizontale Schwenkachse 21 ein, um diese zu drehen. Dadurch wird das obere Ende der Scheibe 12 zum Fahrzeuginnern geschwenkt, bis die Scheibe 12 schließlich in der Position 12' im Fahrzeuginnern herabhängt. In der Position 12' taucht die Scheibe 12 in eine Mulde 27 ein, die von der Innenhaut 24a der Fahrzeugtür gebildet wird (Fig. 4) und deren untere Begrenzungswand zugleich eine Armstütze bildet.

Die bewegbare Scheibe 12 erstreckt sich in der Höhe etwa über ein Drittel der Höhe der Fensteröffnung 10. Wie aus Fig. 5 zu ersehen ist, schließt das untere Ende der Scheibe 12 im wesentlichen bündig mit der Außenhaut 24b der Fahrzeugtür 24 ab. Dies bedeutet, daß die Außenhaut 24b in bezug auf die geschlossene Scheibe 12 nicht seitlich vorsteht. Die Scheiben 11 und 12 stoßen an der Stoßkante 14 ebenfalls bündig gegeneinander, d.h. keine dieser Scheiben steht gegenüber der anderen Scheibe nach innen oder außen vor. Längs der Stoßkante 14 kann natürlich eine dünne Dichtleiste vorgesehen sein.

Die den oberen Bereich der Fensteröffnung 10 ausfüllende feste Scheibe 11 kann gemäß Fign. 4 und 5 stark gekrümmt sein, so daß der obere Holmen 10c der Fensteröffnung viel weiter zum Fahrzeuginnern angeordnet ist als der untere Rand 10a der Fensteröffnung 10. Der obere Bereich der Scheibe 11 ist stark gewölbt und verläuft am oberen Ende nahezu horizontal, um das Innenvolumen des Fahrzeugs zu erhöhen. Der obere Holmen 19 legt sich bei geschlossener Fahrzeugtür gegen eine Dichtleiste 28 am Dachrahmen 29. Unter dem Dachrahmen 29 ist der Fahrzeughimmel 30 befestigt.

Im oberen Bereich des vorderen Schrägholmens 10b ist der Rückspiegel 31 etwa in Augenhöhe des Fahrers befestigt.Gegenüber der sonst üblichen Rückspiegelanordnung hat die relativ hohe Anbringung des Rückspiegels den Vorteil, daß der Fahrer den Kopf nicht neigen muß, um den Rückspiegel einzusehen.

Auch bei dem Ausführungsbeispiel der Fign. 3 bis 5 besteht die Fahrzeugtür aus einem Skelett aus rohrförmigen Streben 32, die zusammen mit der Innenhaut 24a eine einstückige Struktur bilden. An dieser Struktur ist die Außenwand 24b nachträglich,z.B. durch Ankleben,befestigt. Auch die feststehende Scheibe 12 ist an dieser Struktur angeklebt, und zwar so, daß ihre Ränder bündig mit den Außenseiten der die Fensteröffnung 10 begrenzenden Holmen 10a, 10b, 10c abschließen.

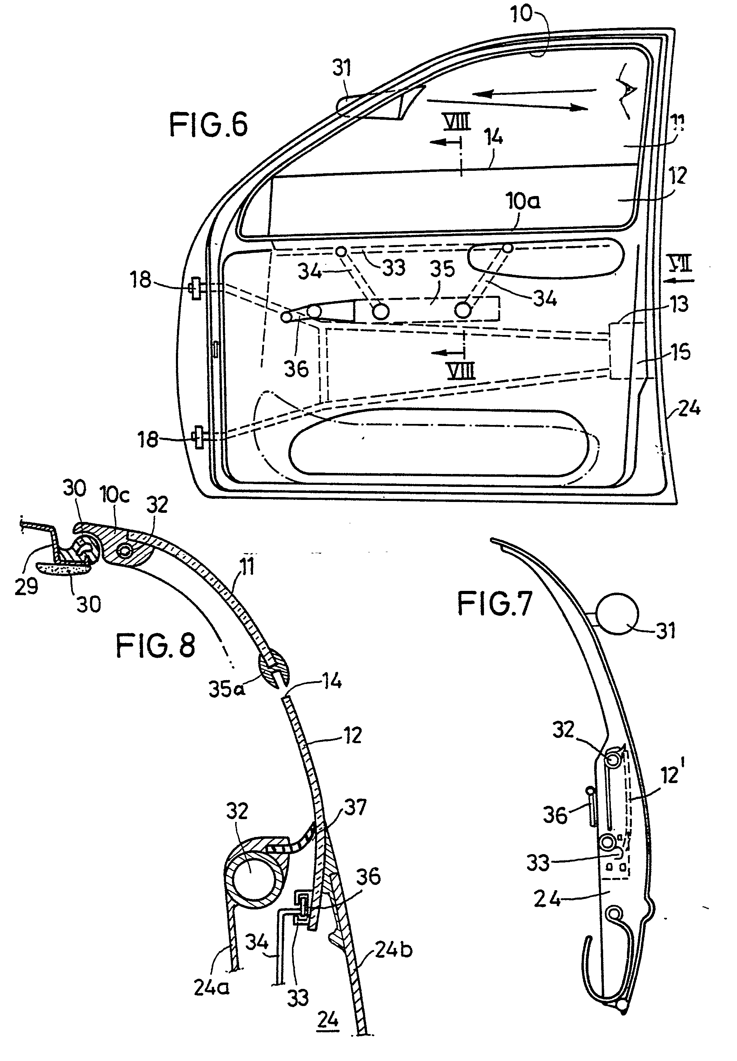

Die in den Fign. 6 bis 8 dargestellte Fahrzeugtür 24 ist in gleicher Weise ausgebildet wie die Fahrzeugtür der vorherigen Ausführungsbeispiele, mit Ausnahme der Tatsache, daß die bewegbare Scheibe 12 durch translatorische Abwärtsbewegung in das Innere der Tür 24 hinein abgesenkt wird. Die Scheibe 12 erstreckt sich etwa über ein Drittel der Höhe der Fensteröffnung 10. Sie ist im wesentlichen rechteckig und an ihrem unteren Rand ist innen eine Führungsschiene 33 befestigt, in die die Arme 34 eines Hubmechanismus 35 mit Rollen 36 eingreifen. Der Hubmechanismus 35 wird in bekannter Weise von einer Handkurbel 36 oder einem Servomotor angetrieben. Die Scheibe 12 ragt durch den von Dichtungsleisten begrenzten Fensterspalt 37 der Tür 24 (Fig. 8) hindurch. Da bei dem vorliegenden Ausführungsbeispiel die Scheibe 12 eine starke Krümmung aufweist, ist eine Führungsvorrichtung vorgesehen, um die Scheibe 12 beim Absenken seitlich so zu führen, daß die Scheibe stets im Fensterspalt 37, der nicht breiter ist als die Scheibenstärke, verbleibt. Dieser Führungsmechanismus, der aus einer Kulissen- oder Kantenführung bestehen kann, ist aus Grinden der Übersichtlichkeit nicht dargestellt.

Längs der Unterkante der festen Scheibe 11 ist eine Dichtung 35a angeordnet, die die Oberkante der bewegbaren Scheibe 12 abdichtend aufnehmen kann.

## Ansprüche

1. Fahrzeugfenster mit einer feststehenden Scheibe, die einen Teil der Fensteröffnung ausfüllt,und einer bewegbaren Scheibe, die den Rest der Fensteröffnung bedeckt,

dadurch gekennzeichnet, daß die bewegbare Scheibe (12)aus einem am vorderen Ende der Fensteröffnung angeordneten, um eine horizontale Schwenkachse (13)schwenkbaren,im wesentlichen teilkreisförmigen Sektor besteht, der in das Innere der Fahrzeugtür hinein absenkbar ist.

2. Fahrzeugfenster mit einer feststehenden Scheibe, die einen Teil der Fensteröffnung ausfüllt, und einer bewegbaren Scheibe, die den Rest der Fensteröffnung bedeckt dadurch gekennzeichnet, daß die bewegbare Scheibe 12),die im unteren Bereich der Fensteröffnung(10) angeordnet ist, in das Innere der Fahrzeugtür (24) hinein absenkbar ist.

3. Fahrzeugfenster mit einer feststehenden Scheibe, die einen Teil der Fensteröffnung ausfüllt,und einer bewegbaren Scheibe, die den Rest der Fensteröffnung bedeckt, dadurch gekennzeichnet, daß die bewegbare Scheibe (12) um eine in der Nähe des unteren Randes (10a) der Fensteröffnung (10) angeordnete, in Fahrzeuglängsrichtung verlaufende Schwenkachse (21) herum in das Fahrzeuginnere hinein klappbar ist.

4. Fahrzeugfenster nach einem der Ansprüche 1 bis 3, dadurch gekennzeichnet, daß die feststehende Scheibe (11) im oberen Bereich bis zu einem annähernd horizontalen Verlauf zum Fahrzeugdach (29) hin gekrümmt ist.

5. Fahrzeugfenster nach einem der Ansprüche 1 bis 4 dadurch gekennzeichnet, daß die feststehende Schebe (11) mindestens abschnittsweise nach außen bündig mit dem Rahmen der Fensteröffnung (10) abschließt.

6. Fahrzeugfenster nach einem der Ansprüche 1 bis 5, dadurch gekennzeichnet, daß die bewegbare Scheibe (12) mindestens abschnittsweise nach außen bündig mit dem Rahmen der Fensteröffnung (10) abschließt.

7. Fahrzeugfenster nach Anspruch 2, dadurch gekennzeichnet, daß die bewegbare gebogene Scheibe (12) durch einen Führungsmechanismus quer zur Fahrzeuglängsrichtung derart geführt ist, daß sie in jeder Stellung der Absenkbewegung durch den im wesentlichen der Stärke dieser Scheibe entsprechenden Fensterspalt (37) hindurchführt.

8 Fahrzeugfenster nach Anspruch 3, dadurch gekennzeichnet, daß die Schwenkachse (21) gegenüber dem unteren Ende der bewegbaren Scheibe (12) zum Fahrzeuginnern hin versetzt ist.

9. Fahrzeugfenster nach Anspruch 8, dadurch gekennzeichnet, daß die Schwenkachse (21) im Mittelbereich (21c) ihrer Länge in bezug auf ihre gelagerten Enden (21a, 21b) nach außen versetzt ist.

FIG.1

FIG.2

FIG.3

10b 31 10 V 10c 11

14 12 10a

VI VI

18 22

25

27

26 12' IV

16

24a

18 24

V

28 10c 19 32

29 FIG.5

11 30

14 11

31

21

12'

25

27

32

16

24a

32

FIG.4

21 20 12

10a

32 24b

12' 24

24a

21b 21c 21 21a 32

19 19

23 32

32 12' FIG.6 22

0 204 997

FIG.6

FIG.7

FIG.8